Europäisches Patentamt

European Patent Office

Office européen des brevets

(11) Publication number: **0 383 431 B1**

# EUROPEAN PATENT SPECIFICATION

(45) Date of publication of patent specification: **17.11.94**  (51) Int. Cl.5: **C04B 35/56**

(21) Application number: **90300461.2**

(22) Date of filing: **17.01.90**

(54) **Process for producing high density silicon carbide sintered bodies.**

(30) Priority: **17.01.89 JP 5871/89**

(43) Date of publication of application:
**22.08.90 Bulletin 90/34**

(45) Publication of the grant of the patent:
**17.11.94 Bulletin 94/46**

(84) Designated Contracting States:
**DE FR GB**

(56) References cited:
GB-A- 2 017 070
US-A- 4 041 117

**CHEMICAL ABSTRACTS, vol. 99, no. 12, 19th September 1983, abstract no. 92446v,Columbus, Ohio, US; & JP-A-58 091 146 (KYO SERA K.K.) 31-05-1983**

**WORLD PATENT INDEX LATEST DATABASE, accession no. 86-033266, Derwent week 05, 1986, Derwent Publications Ltd, London, GB; & JP-A-60 255 672**

(73) Proprietor: **NGK INSULATORS, LTD.**
**2-56, Suda-cho, Mizuho-ku**
**Nagoya City Aichi Pref. (JP)**

(72) Inventor: **Kawasaki, Shinji, NGK Ichioka-Ryo, 38-2**
**Ichioka-Cho 2-chome, Mizuho-Ku**
**Nagoya City, Aichi Pref. (JP)**
Inventor: **Kajita, Masaharu**
**9-1 Shintomi-Cho 2-chome**
**Tajimi City, Gifu Pref. (JP)**
Inventor: **Matsuhiro, Keiji**
**37-1 Takemi-Cho 4-chome, Mizuho-Ku**
**Nagoya-City, Aichi Pref. (JP)**

(74) Representative: **Paget, Hugh Charles Edward et al**
**MEWBURN ELLIS**
**York House**
**23 Kingsway**
**London WC2B 6HP (GB)**

## Description

The present invention relates to a process for producing high density SiC sintered bodies having high strength.

In the case of a process for producing high density SiC sintered bodies by primarily firing shaped bodies made of $\beta$-SiC added with B, C and HIP treating them, high primary firing temperature makes SiC grains take in pores and undergo abnormal grain growth over a few hundreds of $\mu$m during a firing final stage. Consequently, their physical properties are deteriorated, and it becomes difficult to increase density because the pores taken inside the abnormally grown grains cannot be removed by the HIP treatment. When the primary firing temperature is lowered to avoid the abnormal grain growth, the density is not fully increased, and great densification cannot be realized even by the HIP treatment due to the presence of open pores. That is, in order to increase the density by the HIP treatment, it was necessary to strictly control the primary firing temperature range to a narrow width so that the open pores might be diminished and that remaining closed pores might be present in grain boundaries.

From the above standpoint, JP-A-60-255,672 discloses a process for obtaining SiC sintered bodies having high density of not less than 99.3% and a high strength of not less than 70 kg/mm$^2$ by strictly controlling the additive composition range of B and C in SiC having added B and C, the primary firing conditions, and the HIP treating conditions to B = 0.2 to 0.5 wt%, C = 0.5 to 8 wt%, 1,950 to 2,150°C, 1,850 to 1,980°C, and not less than 10 MPa (100 atms), respectively.

Further, JP-A-52-6,716 discloses a process for producing SiC sintered bodies having pores in grain boundaries and a composite structure composed of planar $\alpha$-SiC and finer $\beta$-SiC granules within relatively wide ranges of the composition of additives and the firing conditions, in which the abnormal grain growth is effectively suppressed by adding 0.05 to 5% by weight of $\alpha$-SiC having a grain size as great as not less than 2 times that of $\beta$-SiC in the B-C added $\beta$-SiC.

However, since the composition range, the primary firing conditions and the HIP treating conditions are narrow in the case of the technique disclosed in JP-A-60-255,672, it is difficult to appropriately control the production conditions. Particularly when products having a great size are to be mass produced in an industrial scale, it is difficult to obtain uniform sintered bodies, and the strength is not so great, i.e., 70 kg/mm$^2$, although the density is as high as 99.3% or more.

On the other hand, various production conditions are wide in the technique disclosed in JP-A-52-6,716, which has the composite structure consisting of the planar $\alpha$-SiC grains having a greater aspect ratio, which is considered preferable from the standpoint of increase in strength and toughness, and the finer $\beta$-SiC grains. However, since the obtained product has a density lower than that of a product using $\beta$-SiC powder alone, sintered bodies having high density, high strength, and high toughness, which have recently strongly been demanded, could not be attained. Further, since such products sintered at ordinary pressure have low density, and the pores present are of open pores, the products are unsuitable for densification by HIP treatment.

The object of the present invention is to solve the above-mentioned problems, and to provide a process for easily and stably producing high density, high strength SiC sintered bodies, in which various producing conditions have wide controllable ranges.

The process for producing high density SiC sintered bodies according to the present invention is set out in claim 1.

In the process of the invention, the relatively high density primarily sintered body, which has a composite structure consisting essentially of the planar $\alpha$-SiC grains having a greater aspect ratio and a finer granular $\beta$-SiC and in which remaining closed pores are present in grain boundaries while free from open pores, can be obtained by using the limited composition and grain size of the SiC powder. Thus, high strength SiC sintered bodies having a density of not less than 98% and maintaining the above composite structure by the HIP treatment can easily and stably be obtained. That is, according to the present invention, the high density SiC sintered body having the composite structure consisting essentially of the planar $\alpha$-SiC grains with the greater aspect ratio, which have been considered impossible to increase in density by the HIP treatment, and the finer $\beta$-SiC grains can be obtained by the HIP treatment. The producing process according to the present invention can exhibit synergistic effects obtained by combining the use of the SiC powder having the given composition and the grain size and the HIP treatment. In the invention process, the composition range, the primary firing conditions and the HIP treating conditions to produce the above-mentioned sintered bodies can be made wider. Thus, the process according to the present invention has extremely high industrial usefulness.

Further, since MgO is added into the formulated powder, the distribution and the shape of the pores remaining in the primarily sintered body are controlled, so that the sintered body can be densified to almost

2

an ideal density (3.21 g/cm³). MgO exhibits its effect in the case that the SiC powder having the limited composition and grain size of the invention is used. Since MgO promotes the growth of the planar α-SiC grains, which are formed with SiC nucleus as seed of at least one of 6H, 4H and 15R polytype SiC uniformly dispersed in the shaped body, these grains uniformly grow in the primarily sintered body. As a result, the pores in the primarily sintered body are uniformly dispersed in the grain boundaries, so that the shape of the pores surrounded by the planar grains becomes shaper. Although MgO functions to control the microstructure of the sintered body, it evaporates during the firing. Consequently, almost no MgO remains in the primarily sintered body. The microstructure of the primarily sintered body increases the effect of densifying SiC in the HIP treatment, and the highly dense SiC sintered body having almost the ideal density can be obtained. The above was first discovered by the present inventors.

For a better understanding of the invention, reference is made to the attached drawing, wherein:

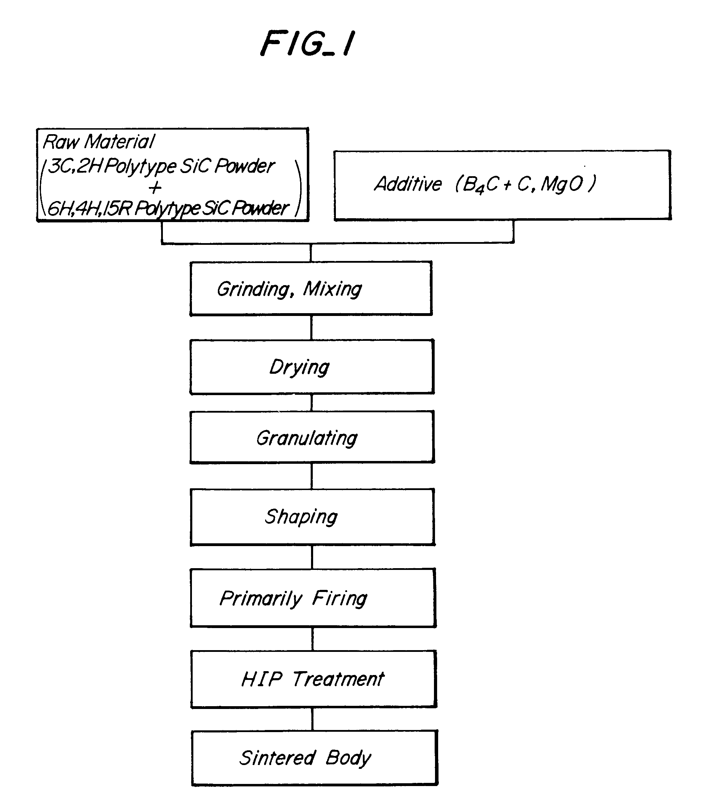

Fig. 1 is a flow chart illustrating an example of production steps of the producing process according to the present invention.

The SiC powder composed of at least one of 3C and 2H polytypes is substantially a low temperature type powder synthesized at temperatures not more than 2,000°C. A silica reduction carbonization process is known for its production. The SiC powder composed of at least one of 6H, 4H and 15R polytypes is substantially a high temperature type powder synthesized at temperatures of not less than 2,000°C. An Acheson process is generally employed for its production. The latter SiC powder may be synthesized by treating the former SiC powder composed of at least one of 3C and 2H polytypes at high temperatures of not less than 2,000°C.

The reason why the amount of the SiC powder composed of at least one of 6H, 4H and 15R polytypes to be added is limited to 5.0 to 0.1% by weight is that if it exceeds 5.0% by weight, the aspect ratio of the planar α-SiC grains becomes smaller to deteriorate the physical properties. On the other hand, if it is less than 0.1% by weight, the effects obtained by the addition disappears.

The reason why the grain diameter of the SiC powder composed of at least one of 6H, 4H and 15R polytypes is limited to less than twice that of the SiC powder composed of at least one of the 3C and 2H polytypes is that if it is more than twice, the density cannot be increased even by the HIP treatment because of a great amount of the open pores remain in the primarily sintered body.

The reason why the amount of boron as an additive is limited to 0.1 to 5.0% by weight is that if it is less than 0.1% by weight, the effect due to the addition cannot be recognized and densification is insufficient, while if it is more than 5.0% by weight, a great amount of boron remains in the grain boundaries to deteriorate high temperature characteristics. Furthermore, the reason why the amount of carbon as an additive is limited to 0.1 to 5.0% by weight is that if it is less than 0.1% by weight, an $SiO_2$ film on the surface of the SiC cannot be removed and the densification is insufficient, while if it is more than 5.0% by weight, a great amount of free carbon remains in the sintered body to deteriorate the characteristics.

The reason why the amount of MgO is limited to 0.1 to 5.0% by weight is that if it is less than 0.1% by weight, the effect due to the addition cannot be recognized, and a change in the characteristics of the sintered body after the HIP treatment is not recognized as compared with a case where no MgO is added. On the other hand, if the amount of MgO is more than 5.0% by weight, the primarily sintered body is not sufficiently densified and pores are not closed, so that the effects cannot be exhibited by the HIP treatment.

Further, the reason why the primarily firing temperature before the HIP treatment is limited to 1,900 to 2,300°C is that if it is less than 1,900°C, the open pores remain and the sintered body cannot be densified even by the HIP treatment. On the other hand, if it exceeds 2,300°C, the surface of the sintered body becomes coarse owing to decomposition of SiC. The reason why the HIP treating conditions are limited to the temperature range from 1,800 to 2,200°C and not less than 10 MPa (100 atms) is that if it is less than 1,800°C, the densification is insufficient, while if it is more than 2,200°C, the production process becomes too costly and meaningless. On the other hand, if the pressure is less than 10 MPa (100 atms), the sintered body cannot fully be densified. The reason why the grain diameter of the SiC powder composed of at least one of 6H, 4H and 15R polytypes added is preferably near that of the SiC powder composed of at least one of 3C and 2H polytypes, is that the SiC powders can uniformly be mixed in such a case.

Fig. 1 is a flow chart illustrating an example of production steps of the producing process according to the present invention. First, a high temperature type SiC powder and a low temperature type SiC powder are prepared. Further, $B_4C$, C and MgO are prepared as additives. The high temperature type SiC powder is produced by the Acheson process, and is composed of at least one of 6H, 4H and 15R polytypes having an average grain diameter of not more than 5 μm. The low temperature SiC powder is produced by the silica reducing carbonisation process, and is composed of at least one kind of 3C and 2H polytypes having an average grain diameter of not more than 5 μm. The chemical composition of each of the SiC powders is shown in Table 1 below.

Table 1

| Chemical composition (wt%) | 6H, 4H, 15R polytype SiC | 3C, 2H polytype SiC |
|---|---|---|
| Total-Si | 69.02 | 69.24 |
| Free-SiO$_2$ | 0.80 | 0.36 |
| Free-Si | 0.02 | 0.01 |
| Free-C | 0.354 | 0.36 |
| O | 1.14 | 0.88 |
| Aℓ | 0.009 | 0.067 |
| Fe | 0.063 | 0.040 |
| Ca | 0.021 | 0.031 |
| Mg | 0.005 | 0.016 |
| K | 0 | 0.001 |
| Na | 0.007 | 0.002 |
| Cu | 0.005 | 0.002 |
| Ti | 0.022 | 0.005 |
| N | - | 0.17 |

Next, given amounts of the thus prepared SiC powders, B$_4$C, C and MgO additives are ground and mixed in a wet type ball mill using isopropyl alcohol. After the ground and mixed material is once dried, it is granulated. Then, the granulated powder is preliminarily shaped, and then finally shaped to a given shape by isostatic pressing. Then, after the shaped body is primarily fired in a temperature range from 1,900 to 2,300°C in vacuum or in an inert atmosphere, an SiC sintered body is obtained by treating the fired body in a temperature range from 1,800 to 2,200°C under pressure of not less than 10 MPa (100 atms) in an inert atmosphere by hot isostatic press (HIP).

In the following, examples of the producing process according to the present invention will be given.

Examples

An SiC powder composed of at least one of 6H, 4H and 15R polytypes having an average grain diameter of 0.42 $\mu$m, an SiC powder composed of at least one of 3C and 2H polytypes having an average grain diameter of 0.45 $\mu$m, B$_4$C (boron carbide), C (carbon black) and MgO (magnesium oxide) were mixed at a mixing recipe shown in Table 2 in a wet type ball mill using isopropyl alcohol, and then granulated after drying. After preliminary shaping, a rectangular plate having a shape of 60×60×6 mm was prepared by isostatic pressing at 3 ton/cm$^2$. Next, the thus prepared rectangular plate was primarily fired in vacuum under conditions shown in Table 2. The primarily fired rectangular plate was treated by HIP under conditions shown in Table 2. Thereby, sintered bodies were obtained as Examples of the present invention and Comparative Examples. An SiC powder having the average grain diameter of 1.5 $\mu$m was used as the SiC powder of the 6H, 4H and 15R polytypes in Comparative Examples 9 and 10.

With respect to the sintered bodies before and after the HIP treatment, the denseness was evaluated by measuring the density and the open porosity by the Archimedean process. Strength at room temperature was evaluated by effecting the four point bending test according to JIS R-1601 at room temperature (Test method for measuring the flexural strength of fine ceramics). Further, toughness was evaluated by determining K$_{IC}$ at room temperature according to the chevron-notch process, and presence or absence of abnormal grain growth was checked by observing a polished and etched surface with a microscope. Results are shown in Table 2.

4

In Table 2, pressures are given in atm. 1 atm = $10^5$ Pa.

## Table 2(a)

| | SiC material | | Sintering aid | | | Primarily firing conditions | | Primarily fired bodies | | HIP treating conditions | | | HIP treated products | | | |
| | 3C, 2H type material (g) | 6H, 4H, 15R type material (g) | B$_4$C (g) | C (g) | MgO (g) | Temperature (°C) | Time (hr) | Density (g/cm$^3$) | Open pore rate (%) | Temperature (°C) | Pressure (atm) | Time (hr) | Density (g/cm$^3$) | Strength at room temperature (MPa) | KIC (MPam$^\frac{1}{2}$) | Presence of abnormally grown grains |
|---|---|---|---|---|---|---|---|---|---|---|---|---|---|---|---|---|
| Comparative Example 1 | 100 | 0 | 1 | 2 | – | 2100 | 1 | 3.08 | <0.2 | 2000 | 2000 | 2 | 3.10 | 480 | 2.8 | present |
| Comparative Example 2 | 99.99 | 0.01 | 1 | 2 | – | 2100 | 1 | 3.06 | <0.2 | 2000 | 2000 | 2 | 3.09 | 490 | 2.8 | present |
| Comparative Example 3 | 99.9 | 0.1 | 1 | 2 | – | 2100 | 1 | 3.04 | <0.2 | 2000 | 2000 | 2 | 3.18 | 870 | 3.2 | not present |
| Comparative Example 4 | 99.0 | 1.0 | 1 | 2 | – | 2100 | 1 | 3.02 | <0.2 | 2000 | 2000 | 2 | 3.19 | 950 | 3.5 | not present |
| Comparative Example 5 | 97.0 | 3.0 | 1 | 2 | – | 2100 | 1 | 2.98 | <0.2 | 2000 | 2000 | 2 | 3.19 | 900 | 3.4 | not present |
| Comparative Example 6 | 95.0 | 5.0 | 1 | 2 | – | 2100 | 1 | 3.00 | <0.2 | 2000 | 2000 | 2 | 3.19 | 850 | 3.3 | not present |
| Comparative Example 7 | 90.0 | 10.0 | 1 | 2 | – | 2100 | 1 | 3.04 | <0.2 | 2000 | 2000 | 2 | 3.18 | 670 | 2.7 | not present |
| Comparative Example 8 | 0 | 100 | 1 | 2 | – | 2100 | 1 | 3.10 | <0.2 | 2000 | 2000 | 2 | 3.16 | 580 | 2.6 | not present |

Table 2(b)

| | SiC material | | Sintering aid | | | Primarily firing conditions | | Primarily fired bodies | | HIP treating conditions | | | HIP treated products | | | |
|---|---|---|---|---|---|---|---|---|---|---|---|---|---|---|---|---|
| | 3C, 2H type material (g) | 6H, 4H, 15R type material (g) | B₄C (g) | C (g) | MgO (g) | Temperature (°C) | Time (hr) | Density (g/cm³) | Open pore rate (%) | Temperature (°C) | Pressure (atm) | Time (hr) | Density (g/cm³) | Strength at room temperature (MPa) | $K_{IC}$ (MPam$^{1/2}$) | Presence of abnormally grown grains |
| Comparative Example 9 | 99.0 | 1.0 | 1 | 2 | – | 2100 | 1 | 2.82 | 10.8 | 2000 | 2000 | 2 | 2.84 | – | – | not present |
| Comparative Example 10 | 95.0 | 5.0 | 1 | 2 | – | 2100 | 1 | 2.76 | 12.1 | 2000 | 2000 | 2 | 2.77 | – | – | not present |
| Comparative Example 11 | 99.0 | 1.0 | 0 | 2 | – | 2100 | 1 | 2.25 | 28.8 | 2000 | 2000 | 2 | 2.28 | – | – | not present |
| Comparative Example 12 | 99.0 | 1.0 | 1 | 0 | – | 2100 | 1 | 2.48 | 21.2 | 2000 | 2000 | 2 | 2.54 | – | – | not present |
| Comparative Example 13 | 99.0 | 1.0 | 1 | 2 | – | 1800 | 1 | 2.38 | 24.3 | 2000 | 2000 | 2 | 2.46 | – | – | not present |
| Comparative Example 14 | 99.0 | 1.0 | 1 | 2 | – | 2000 | 1 | 2.95 | 0.3 | 2000 | 2000 | 2 | 3.19 | 940 | 3.5 | not present |
| Comparative Example 15 | 99.0 | 1.0 | 1 | 2 | – | 2200 | 1 | 3.05 | <0.2 | 2000 | 2000 | 2 | 3.18 | 930 | 3.4 | not present |
| Comparative Example 16 | 99.0 | 1.0 | 1 | 2 | – | 2100 | 1 | 3.02 | <0.2 | 1700 | 2000 | 2 | 3.02 | 570 | 2.6 | not present |

Table 2(c)

| | SiC material | | Sintering aid | | | Primarily firing conditions | | Primarily fired bodies | | HIP treating conditions | | | HIP treated products | | | |
|---|---|---|---|---|---|---|---|---|---|---|---|---|---|---|---|---|
| | 3C, 2H type material (g) | 6H, 4H, 15R type material (g) | B₄C (g) | C (g) | MgO (g) | Temperature (°C) | Time (hr) | Density (g/cm³) | Open pore rate (%) | Temperature (°C) | Pressure (atm) | Time (hr) | Density (g/cm³) | Strength at room temperature (MPa) | K$_{IC}$ (MPam½) | Presence of abnormally grown grains |
| Comparative Example 17 | 99.0 | 1.0 | 1 | 2 | - | 2100 | 1 | 3.02 | <0.2 | 1900 | 2000 | 2 | 3.19 | 920 | 3.5 | not present |
| Comparative Example 18 | 99.0 | 1.0 | 1 | 2 | - | 2100 | 1 | 3.02 | <0.2 | 2200 | 2000 | 2 | 3.19 | 940 | 3.5 | not present |
| Comparative Example 19 | 99.0 | 1.0 | 1 | 2 | - | 2100 | 1 | 3.02 | <0.2 | 2000 | 50 | 2 | 3.05 | 620 | 2.7 | not present |
| Comparative Example 20 | 99.0 | 1.0 | 1 | 2 | - | 2100 | 1 | 3.02 | <0.2 | 2000 | 500 | 2 | 3.18 | 890 | 3.3 | not present |
| Example 1 | 99.0 | 1.0 | 1 | 2 | 0.1 | 2100 | 1 | 3.00 | <0.2 | 2000 | 2000 | 2 | 3.20 | 1050 | 3.6 | not present |
| Example 2 | 99.0 | 1.0 | 1 | 2 | 2.0 | 2100 | 1 | 2.88 | <0.2 | 2000 | 2000 | 2 | 3.21 | 1100 | 3.7 | not present |
| Example 3 | 99.0 | 1.0 | 1 | 2 | 5.0 | 2100 | 1 | 2.82 | 0.2 | 2000 | 2000 | 2 | 3.20 | 1030 | 3.6 | not present |
| Example 4 | 97.0 | 3.0 | 1 | 2 | 2.0 | 2100 | 1 | 2.85 | <0.2 | 2000 | 2000 | 2 | 3.20 | 980 | 3.5 | not present |
| Comparative Example 21 | 99.0 | 1.0 | 1 | 2 | 10.0 | 2100 | 1 | 2.30 | 26.2 | 2000 | 2000 | 2 | 2.30 | - | - | not present |

As clear from the results in Table 2, when the amount of the SiC powder composed of 6H, 4H and/or 15R polytypes was less than 0.05% by weight (Comparative Examples 1 and 2), the abnormal grain growth of SiC occurred in the primarily fired body, so that no sufficient densification was exhibited by the HIP treatment, and that strength and K$_{IC}$ lowered. When the amount of the SiC powder composed of the 6H, 4H and/or 15R polytypes exceeded 5.0% by weight (Comparative Examples 3 and 4), no abnormal grain

7

growth occurred in the primarily fired bodies. However, the aspect ratio of the α-SiC grains become smaller, and the strength and the $K_{IC}$ value lowered. When the average grain diameter of the SiC powder composed of the 6H, 4H and/or 15R polytypes (Comparative Examples 5 and 6), the density of the primarily fired bodies was low, and since a great amount of open pores remain in the fired bodies, high density could not be obtained even by the HIP treatment. When the addition amount of $B_4C$ was less than 0.1% by weight (Comparative Example 7), or when the addition amount of C was less than 0.1% by weight (Comparative Example 8), or when the primarily firing temperature was less than 1,900°C (Comparative Example 9), the density of the primarily fired bodies is low, and since a great amount of open pores remain in the sintered bodies, the high density could not be obtained even by the HIP treatment. When the HIP treatment temperature was less than 1,800°C (Comparative Example 10), or when the HIP treating pressure was less than 10 MPa (100 atms) (Comparative Example 11), sufficiently high density could not be obtained even by the HIP treatment so that the strength and the $K_{IC}$ value were low. From Table 2, it is seen that Examples 1 through 4 satisfying the ranges of the present invention have in general higher density, higher strength, higher $K_{IC}$ values, and improved toughness as compared with the Comparative Examples.

Particularly, it can be seen that the sintered bodies having undergone the HIP treatment had higher density and higher strength (Examples 1 to 4) as compared with cases where no MgO was added. However, when the addition amount of MgO is more than 5.0% by weight, the density of the primarily fired body is low, and since a great amount of open pores remain in the fired body, high density could not be obtained even by the HIP treatment (Comparative Example 21).

As is clear from the above explanation, according to the process for producing the high density SiC sintered bodies according to the present invention, high density SiC sintered bodies can easily and stably be obtained in wide ranges of the composition, the primarily firing conditions, and the HIP treating conditions by primarily firing the mixed SiC powder and then effecting the HIP treatment. In addition, the density of the SiC sintered bodies obtained according to the present invention is higher as compared with the sintered bodies composed essentially of α-SiC or β-SiC alone. Furthermore, since the sintered bodies according to the present invention has the composite structure consisting of planar α-SiC having a greater aspect ratio and the β-SiC having finer grains than those of the α-SiC, mechanical characteristics are better than those of sintered bodies composed of the α-SiC or the β-SiC alone.

## Claims

1. A process for producing a high density SiC sintered body, comprising the steps of:
   formulating a powder consisting essentially of:
   (a) 90-99.8 part by weight SiC powder consisting essentially of:
      (i) 95.0 to 99.9 wt% of a first SiC powder consisting of at least one of 3C and 2H polytype SiC, and
      (ii) 0.1 to 5.0 wt% of a second SiC powder consisting of at least one of 6H, 4H and 15R polytype SiC, said second SiC powder having an average grain diameter which is less than twice that of said first SiC powder;
   (b) 0.1 to 5.0 parts by weight, when calculated as boron, boron or a boron-containing compound;
   (c) 0.1 to 5.0 parts by weight, when calculated as carbon, carbon or a carbon-producing organic compound;
   the above components giving in total 100 part by weight;
   (d) 0.1 to 5.0 parts by weight MgO per 100 parts by weight of SiC, B and C;
   mixing the formulated powder;
   shaping the formulated powder into a shaped body;
   firing the shaped body in a vacuum or an inert gas atmosphere in a temperature range from 1900°C to 2300°C; and
   hot isostatically pressing the fired body in an inert gas atmosphere in a temperature range from 1800°C to 2200°C under a pressure of not less than 10 MPa (100 atms).

## Patentansprüche

1. Verfahren zur Herstellung eines SiC-Sinterkörpers hoher Dichte, umfassend die Schritte von:
   Formulieren eines Pulvers, das im wesentlichen besteht aus:
   (a) 90-99,8 Gewichtsteile SiC-Pulver, das im wesentlichen besteht aus:

(i) 95,0 bis 99,9 Gew.-% eines ersten SiC-Pulvers aus zumindest einem des 3C- und 2H-Polytyp-SiC, und

(ii) 0,1 bis 5,0 Gew.-% eines zweiten SiC-Pulvers, das aus zumindest einem des 6H-, 4H- und 15R-Polytyp-SiC mit einem durchschnittlichen Korndurchmesser, der weniger als das Doppelte dieses ersten SiC-Pulvers beträgt, besteht;

(b) 0,1 bis 5,0 Gewichtsteile (als Bor berechnet) Bor oder eine borhaltige Verbindung;

(c) 0,1 bis 5,0 Gewichtsteile (als Kohlenstoff berechnet) Kohlenstoff oder eine kohlenstoff-produzierende organische Verbindung;

wobei die eben genannten Komponenten zusammen 100 Gewichtsteile ergeben;

(d) 0,1 bis 5,0 Gewichtsteile MgO pro 100 Gewichtsteile SiC, B und C;

Mischen des formulierten Pulvers;

Formen des formulierten Pulvers zu einem Formkörper;

Brennen des Formkörpers im Vakuum oder in Inertgasatmosphäre in einem Temperaturbereich von 1900°C bis 2300°C; und

isostatisches Heißpressen des gebrannten Körpers in einer Inertgasatmosphäre in einem Temperaturbereich von 1800°C bis 2200°C unter einem Druck von nicht weniger als 10 MPa (100 atm).

## Revendications

1. Procédé de fabrication d'un corps fritté en SiC de densité élevée comprenant les étapes de :

formuler une poudre consistant essentiellement en :

(a) 90-99,8 parties en poids de poudre de SiC consistant essentiellement en :

(i) 95,0 à 99,9% en poids d'une première poudre de SiC consistant en au moins l'un de SiC du polytype 3C et 2H, et

(ii) 0,1 à 5,0% en poids d'une seconde poudre de SiC consistant en au moins l'un de SiC du polytype 6H, 4H et 15R, ladite seconde poudre de SiC ayant un diamètre moyen du grain qui est inférieur au double de celui de ladite première poudre de SiC;

(b) 0,1 à 5,0 parties en poids, en calculant sous la forme de bore, de bore ou d'un composé contenant du bore;

(c) 0,1 à 5,0 parties en poids, en calculant sous la forme de carbone, de carbone ou d'un composé organique produisant du carbone;

les composants ci-dessus donnant, au total, 100 parties en poids;

(d) 0,1 à 5,0 parties en poids de MgO pour 100 parties en poids de SiC, B et C;

mélanger la poudre formulée;

configurer la poudre formulée en un corps en forme;

cuire le corps en forme sous vide ou dans une atmosphère d'un gaz inerte à une température comprise entre 1900°C et 2300°C; et

presser isostatiquement à chaud le corps cuit dans une atmosphère d'un gaz inerte à une température comprise entre 1800°C et 2200°C sous une pression de pas moins de 10 MPa (100 atms).

# FIG_1

```
┌─────────────────────────────────┐   ┌────────────────────────────────────┐
│ Raw Material                    │   │                                    │
│ ⎛ 3C,2H Polytype SiC Powder  ⎞  │   │ Additive  (B₄C + C, MgO )          │
│ ⎜         +                  ⎟  │   │                                    │
│ ⎝ 6H,4H,I5R Polytype SiC Powder⎠│   │                                    │
└─────────────────────────────────┘   └────────────────────────────────────┘
                    └──────────────┬──────────────────┘
                        ┌──────────────────────┐
                        │   Grinding, Mixing    │
                        └──────────────────────┘
                                   │
                        ┌──────────────────────┐
                        │       Drying          │
                        └──────────────────────┘
                                   │
                        ┌──────────────────────┐
                        │     Granulating       │
                        └──────────────────────┘
                                   │
                        ┌──────────────────────┐
                        │       Shaping         │
                        └──────────────────────┘
                                   │
                        ┌──────────────────────┐
                        │   Primarily Firing    │
                        └──────────────────────┘
                                   │
                        ┌──────────────────────┐
                        │    HIP Treatment      │
                        └──────────────────────┘
                                   │
                        ┌──────────────────────┐
                        │    Sintered Body      │
                        └──────────────────────┘
```